# EUROPÄISCHE PATENTANMELDUNG

(11) **EP 1 281 653 A2**
(43) Veröffentlichungstag der Anmeldung: **05.02.2003**
(21) Anmeldenummer: 02014922.5
(22) Anmeldetag: 08.07.2002
(51) Int. Cl.: B65H 35/08

(54) **Vorrichtung zum rotativen Bearbeiten von blattförmigen Bedruckstoffen**

(30) Priorität: 30.07.2001 DE 10137165; 24.09.2001 DE 10146923
(71) Anmelder: Heidelberger Druckmaschinen Aktiengesellschaft, 69115 Heidelberg (DE)
(72) Erfinder: Glemser, Gerhard, 70327 Stuttgart (DE); Kranz, Joachim, 73087 Boll (DE); Ries, Jürgen, 73760 Ostfildern (DE); Uekert, Karsten, 73087 Boll (DE)
(74) Vertreter: Franzen, Peter

(57) **Zusammenfassung**

Die Erfindung betrifft eine Vorrichtung zum fliegenden Zerschneiden von blattförmigen Bedruckstoffen (1), mit einem rotativen Schneidmodul (40) und mindestens einem dem Schneidmodul (40) vorgelagerten Kantensensor (32, 32') zur Detektion der Vorderkante oder Hinterkante des blattförmigen Materials (1), wobei der Beginn des Schneidvorgangs durch eine Elektronik in Abhängigkeit von dem Detektionssignal des Kantensensors (32, 32') und der Länge des blattförmigen Bedruckstoffs (1) bestimmt wird.

## Beschreibung

Die Erfindung betrifft eine Vorrichtung zum rotativen Zerschneiden von blattförmigen Bedruckstoffen, gemäß des Oberbegriffs des Anspruchs 1.

Typischerweise werden Vorrichtungen der genannten Art, sogenannte Querschneider, eingesetzt, um flächige Materialien, also Bahnmaterialien, die in Rollendruckmaschinen bedruckt werden, in Bögen zu zerschneiden. Querschneider lassen sich anhand von Merkmalen wie z.B. dem fliegenden oder statischen Zerschneiden unterscheiden, je nachdem, ob sich die flächigen Materialien während des Zerschneidevorgangs bewegen oder ruhen. Des weiteren lassen sich Querschneider durch die Bewegung der zerschneidenden Elemente als rotativ und lineare zerschneidende Vorrichtungen unterscheiden. Ein weiteres Merkmal ergibt sich durch die Art des Beginns des Bearbeitungsvorgangs, wobei man Vorrichtungen unterscheiden kann, bei denen die Bearbeitungselemente kontinuierlich in Bewegung sind oder aber diskontinuierlich, also jeden einzelnen Bearbeitungsvorgang aus dem Stand beginnen. Alle diese unterschiedlichen Merkmale haben Vor- und Nachteile, die dem Fachmann aus einem umfangreichen Stand der Technik bekannt sind, der z.B. in H. Kipphan: "Handbuch der Printmedien"; Springer Verlag (2000), S. 826f. detailliert beschrieben wird.

Zu Vorrichtungen mit diskontinuierlichen Bearbeitungsvorgängen wird in der deutschen Patentschrift DE 34 19 254 C1 eine Vorrichtung zum fliegenden Einbringen von Löchern mittels einer rotativen Stanzvorrichtung mit einem Wellenpaar, die zusammenpassende Stempel und Matrizen aufweisen, offenbart, bei der der Stanzvorgang durch einen Sensor ausgelöst wird. Der Sensor ist hier vor der Stanzvorrichtung im Pfad der blattförmigen Bedruckstoffe angebracht. Durch Detektion der Vorderkante eines Blattes wird der Stanzvorgang wahlweise direkt oder mit einer bestimmten zeitlichen Verzögerung ausgelöst. Auf diese Weise kann die Position der Löcher in dem Papier bestimmt und auch variiert werden.

Häufig ist es von Vorteil, mit einer Vorrichtung Bogen in unterschiedlichen Formaten zu zerschneiden. So wird in der US-Patentschrift US 5,662,018 eine rotativ zerschneidende Vorrichtung offenbart, die dies erlaubt. Dazu sind auf dem Umfang einer Walze Schneiden angebracht, die über den Umfang der Walze herausragen. Auf einer zur ersten Walze parallelen aber gegenläufig rotierenden zweiten Walze sind den Schneiden der ersten Walze entsprechende Gegenschneiden angebracht, so dass bei einer Synchronisation der Walzen die Schneiden der ersten Walze mit den Gegenschneiden der zweiten Walze zusammenwirken, um ein zwischen den Walzen durchlaufendes flaches Material zu zerschneiden. Die Schneiden weisen einen Abstand entlang des Umfangs der Walze zueinander auf, der gerade einem gewünschten Format entspricht, in das ein durchlaufendes flaches Material zerschnitten werden soll. In der zweiten Walze sind Vertiefungen auf dem Umfang eingearbeitet, derart, dass bei dem Zuschneiden auf einen bestimmten Formattyp nur jeweils die korrespondierenden Schneiden und Gegenschneiden zusammenwirken, um das durchlaufende flache Material zu zerschneiden. Die anderen Schneiden tauchen in diesem Fall in passende Vertiefungen auf dem Umfang der zweiten Walze ein, so dass sie das durchlaufende flache Material nicht versehren. Um unterschiedliche Formate zu zerschneiden, muss lediglich die relative Winkelstellung der zwei Walzen zueinander verändert werden, so dass ein unterschiedliches Schneide/Gegenschneide-Paar zusammenwirkt.

In der europäischen Patentanmeldung EP 1029640 A2 wird eine Querbearbeitungsvorrichtung offenbart, die zwei Bearbeitungseinheiten aufweist, die hintereinander liegen und dadurch zwei aufeinanderfolgende Bearbeitungsebenen darstellen, wobei jeweils eine der Bearbeitungseinheiten durch eine Steuerung ausgewählt werden kann. In einer Ausführungsform ist die Querbearbeitungsvorrichtung aus einem ersten Synchronschneider und einem unmittelbar benachbarten dynamisch variablen Querschneider aufgebaut. Gemäß der Offenbarung kann jeweils einer der Querschneider stillgelegt werden, solange der andere arbeitet. Der stillgesetzte Einzelschneider bildet in diesem Fall einen Durchlass, in den ein Führungstisch eingefahren werden kann. Durch den wahlweisen Einsatz von zwei Querschneidern kann dadurch eine größere Anzahl von unterschiedlichen Formaten geschnitten werden.

Aus dem US-Patent 5,511,744 ist eine Vorrichtung bekannt, bei der Bedruckstoff für einen Kopierer / digitalen Drucker auf Rollen bevorratet ist und vor dem Drucken in Bögen zerschnitten wird.

In vielen Anwendungen, besonders im Bereich von Kopierern und / oder digitalen Druckern, die typischerweise eine Vielzahl unterschiedlicher Bogenformate in unterschiedlichen Vorratsbehältern aufweisen, wäre es von Vorteil, wenn diese Bogen zerschnitten werden könnten, ohne dass die Größe der zu zerschneidenden Bogen zuvor jedes Mal eingestellt werden muss. Dies gilt insbesondere für das Zerschneiden in kleinere Formate, die in diesen Kopierern und / oder digitalen Druckern nicht bedruckt werden können, wie Bogen der Größe A5 und kleiner.

Es ist daher die Aufgabe der Erfindung, eine verbesserte Vorrichtung zum rotativen, fliegenden Zerschneiden von blattförmigen Bedruckstoffen zu schaffen. Diese Aufgabe wird mit der erfindungsgemäßen Vorrichtung zum Zerschneiden von blattförmigen Bedruckstoffen gemäß der kennzeichnenden Merkmale des Anspruchs 1 gelöst.

In einer vorteilhaften Ausgestaltung der erfindungsgemäßen Vorrichtung wird der Beginn des Schneidvorgangs durch eine Elektronik in Abhängigkeit von dem Detektionssignal des Kantensensors und der Länge des zu zerschneidenden blattförmigen Bedruckstoffs bestimmt, insbesondere zur mittigen Zerteilung eines blattförmigen Bedruckstoffs.

In einer Weiterbildung der erfindungsgemäßen Vorrichtung ist ein Längensensor zur Bestimmung der Länge des blattförmigen Bedruckstoffs in Stromrichtung stromaufwärts vor dem rotativen Schneidwerkzeug angebracht. Mittels einer Elektronik kann vorteilhafterweise aus der mittels des dem Schneidwerkzeug vorgelagerten Längensensors bestimmten Länge des blattförmigen Bedruckstoffs die Position des Schnitts und die Zeitspanne berechnet werden, nach der der Schneidvorgang ausgelöst wird, sobald der Kantensensor die Vorder- oder Hinterkante des blattförmigen Bedruckstoffs detektiert hat. Diese Zeitspanne berechnet sich aus der Distanz des Kantensensors zur Schnittposition und der Geschwindigkeit, mit der sich die blattförmigen Bedruckstoffe auf dem Transportpfad durch die erfindungsgemäße Vorrichtung bewegen. Dadurch können beliebige Formate der blattförmigen Bedruckstoffe in bestimmte Größenverhältnisse zerteilt werden, insbesondere in zwei gleich große Teile, ohne dass ein weiterer manueller Eingriff oder eine weitere Voreinstellung betreffs der Größe der bearbeiteten blattförmigen Bedruckstoffe notwendig ist.

In einer besonders vorteilhaften Ausgestaltung der erfindungsgemäßen Vorrichtung werden die blattförmigen Bedruckstoffe mittig unabhängig ihrer Größe auf dem Transportpfad der blattförmigen Bedruckstoffe durch das rotative Schneidwerkzeug bewegt.

In einer weiteren vorteilhaften Ausgestaltung weist die erfindungsgemäße Vorrichtung hinter dem Schneidwerkzeug Transportrollen auf, die das erste Teil des zerschnittenen blattförmigen Bedruckstoffs vorwärts beschleunigen, so dass zwischen dem ersten Teil des blattförmigen Bedruckstoffs und dem zweiten Teil des blattförmigen Bedruckstoffs eine Lücke entsteht. Dadurch werden die blattförmigen Bedruckstoffe gleichmäßiger im weiteren Transportpfad verteilt. Durch die entstehende Lücke können weitere Sensoren die Vorderkante jedes der zerschnittenen Teile des blattförmigen Bedruckstoffs detektieren und diese beispielsweise als Referenz für weitere anschließende Verarbeitungsprozesse verwenden. Ebenfalls wird dadurch die Wahrscheinlichkeit eines fehlerhaften Transports der blattförmigen Bedruckstoffe oder der Teile reduziert.

In einer weiteren vorteilhaften Ausgestaltung weist die erfindungsgemäße Vorrichtung hinter dem Schneidwerkzeug eine Transportpfadsteuerungseinrichtung auf, so dass für jedes der Teile des zerschnittenen blattförmigen Bedruckstoffs unterschiedliche Transportpfade eingestellt werden können. So können beispielsweise zusätzliche Transportpfade in einen Abfallbehälter oder in eine Zwischenablage vorgesehen sein, in die die zerschnittenen Teile selektiv gelenkt werden können. Häufig weisen Dokumente, die gedruckt wurden und im Anschluss zu Broschüren gebunden werden, ein Deckblatt auf, wobei das Deckblatt auf ein anderes Material gedruckt wurde, z.B. auf ein steiferes Material. Wird ein solches Deckblatt nun zerschnitten, da die Broschüre ein kleineres Format aufweist als bedruckt wurde, entstehen durch den Zerschnitt des Deckblatts zwei Blätter, die einem nachgeordneten Bindeprozess aufeinanderfolgend zugeliefert werden. Durch eine dem Schneidwerkzeug nachgeordneten Transportpfadsteuerungsvorrichtung können diese zwei Blätter auf einfache Weise getrennt und gesondert abgelegt oder bei Bedarf entsorgt werden.

In einer weiteren Weiterbildung dieser Ausgestaltung ist eine Parkposition vorgesehen, in die eines der Teile des zerschnittenen blattförmigen Bedruckstoffs gebracht und zu einem späteren Zeitpunkt in den Transportpfad eingespeist wird. Dadurch kann beispielsweise bei einem aus einem anderen Material hergestellten blattförmigen Bedruckstoff, der als Einband (Vorder- und Rückseite) eines gedruckten Dokuments vorgesehen ist und durch die Scheideeinrichtung zerteilt wurde, die Vorderseite nach dem Zerschneiden weiter transportiert werden, die Rückseite dagegen in die Parkposition geleitet und nach dem Verarbeiten des gesamten Dokuments wieder in den Transportpfad eingespeist werden, so dass für nachfolgende Weiterverarbeitungsvorgänge die korrekte Reihenfolge der Seiten gewährleistet ist.
In einer weiteren Weiterbildung dieser Ausgestaltung der erfindungsgemäßen Vorrichtung wird bei der Wiedereinspeisung des einen Teils des zerschnittenen blattförmigen Bedruckstoffs das Teil (z. B. die Rückseite) mittels einer Y-Wendung gewendet.

In einer weiteren Ausgestaltung weist die erfindungsgemäße Vorrichtung vor dem Zerschneidewerkzeug eine Registratur auf, mittels der eine Ausrichtung der Mittellinie des blattförmigen Bedruckstoffs bezüglich der Mittellinie des Zerschneidewerkzeugs vorgenommen wird.

In einer weiteren Ausgestaltung lässt sich die erfindungsgemäße Vorrichtung wahlweise in einem Bypass-Betrieb betreiben, bei dem die blattförmigen Bedruckstoffe nicht zerschnitten werden.

Bevorzugte Ausführungsformen der erfindungsgemäßen Vorrichtung werden im Folgenden unter Bezugnahme auf die Zeichnung im Einzelnen näher beschrieben. Es zeigen in schematischer Darstellung:
- Fig. 1: eine schematische Draufsicht einer Ausführungsform der erfindungsgemäßen Vorrichtung;
- Fig. 2: eine schematische Seitenansicht einer Ausführungsform der erfindungsgemäßen Vorrichtung.

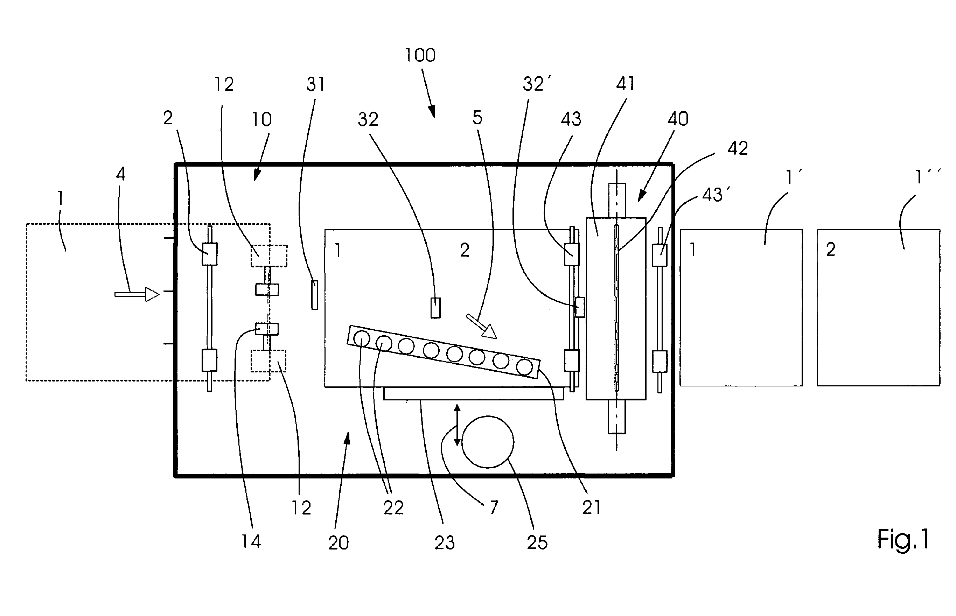

Die Fig. 1 zeigt die schematische Draufsicht einer Ausführungsform der erfindungsgemäßen Vorrichtung. Weitere, allgemein bekannte und zum Betrieb der Vorrichtung erforderliche Antriebs- und/oder Führungsmittel und Kurvenscheiben sind nur schematisch dargestellt bzw. werden nur in allgemeiner Form beschrieben.

Wie in Fig. 1 gezeigt, wird ein blattförmiger Bedruckstoff 1 entlang des mit dem Bezugszeichen 4 gekennzeichneten Pfeils auf einem Transportpfad durch die erfindungsgemäße Vorrichtung 100 transportiert. Dabei kann der blattförmige Bedruckstoff 1 aus einem nicht gezeigten, dem Fachmann bekannten Vorratsbehälter stammen, oder von einer vorgelagerten Verarbeitungsvorrichtung, z.B. einem Drucker /Kopierer oder einer Sammeleinrichtung, transportiert werden. Die Transportrollen 2 übernehmen und transportieren den blattförmigen Bedruckstoff 1 innerhalb einer Preregistratur 10. Zwei einzeln ansteuerbare Elektromotoren 12, die in Wirkverbindung mit je einer Transportrolle 14 stehen, gleichen eventuellen Schräglauf der blattförmigen Bedruckstoffe 1 aus und führen eine erste, grobe Ausrichtung der blattförmigen Bedruckstoffe 1 durch.

Stromabwärts der Preregistratur 10 nachgelagert ist ein Längensensor 31 angebracht, der eine Längenmessung jedes vorbeibewegten blattförmigen Bedruckstoffs 1 durchführt und die ermittelten Daten an eine nicht gezeigte Elektronik übermittelt, die aus den Signalen des Längensensors 31 die Länge des blattförmigen Bedruckstoffs 1 ermittelt. Die Elektronik ermittelt aus der Länge des blattförmigen Bedruckstoffs 1 die Schnittlinie durch den blattförmigen Bedruckstoff 1, insbesondere die Lage der Mitte (in Transportrichtung) des blattförmigen Bedruckstoffs 1. Des weiteren ermittelt die Elektronik aus der Lage der Schnittlinie durch den blattförmigen Bedruckstoff 1 die zeitliche Verzögerung, die zwischen einem Sensorsignal eines Hinterkantensensors 32 oder Vorderkantensensors 32' und dem Einleiten des Schneidvorgangs erforderlich ist, um ein präzises Zerschneiden des blattförmigen Bedruckstoffs durch die ermittelte Schnittlinie zu gewährleisten. Das Einleiten des Schneidvorgangs entspricht dabei dem In-Bewegung-Setzen des Schneidmoduls 40.

Im Bereich einer Registratur 20 wird der blattförmige Bedruckstoff 1 mittig zum Transportpfad des Bedruckstoffs 1 durch die erfindungsgemäße Vorrichtung 100 ausgerichtet. Mittels eines nicht gezeigten, dem Fachmann bekannten, schräg laufenden Bandes wird dabei der blattförmige Bedruckstoff 1 halbschräg entlang der mit dem Bezugszeichen 5 gekennzeichneten Pfeils gegen einen Anschlag 23 geleitet. Dabei dient eine Kugeln 22 tragende Kugelleiste 21 zur Kontaktverbesserung zwischen dem blattförmigen Bedruckstoff 1 und dem schräg laufenden Band. Der Anschlag 23 ist längs der mit dem Bezugszeichen 7 gekennzeichneten Pfeils hin- und herbewegbar, so dass der Anschlag eine dem Format des blattförmigen Bedruckstoffs 1 angepasste Ausrichtung relativ zum Transportpfad des Bedruckstoffs 1 durch die erfindungsgemäße Vorrichtung 100 ermöglicht. Die Veränderung der Position des Anschlags 23 erfolgt in dieser Ausführungsform automatisch mittels einer Kurvenscheibe 25 gemäß einer voreingestellten Formatgröße des blattförmigen Bedruckstoffs.

Am Ende der Registratur 20 wird der blattförmige Bedruckstoff 1 von einem Transportrollenpaar 43, 43' erfasst und in das Schneidmodul 40 transportiert. Dem Schneidmodul 40 vorgelagert ist ein Kantensensor 32, 32'. Je nach Ausführungsform der erfindungsgemäßen Vorrichtung 100 handelt es sich um einen Hinterkantendetektor 32, der weit vor dem Schneidmodul 40 angebracht ist, oder einen Vorderkantendetektor 32', der sich in geringerem Abstand von dem Schneidmodul 40 befindet. Das Schneidmodul 40 besteht im Wesentlichen aus einer Werkzeugwalze 41 und einer Gegenwalze 41', die achsparallel zueinander gelagert sind und synchron gegenläufig rotierend angetrieben werden, wobei sich die Werkzeugwalze 41 oberhalb und sich die Gegenwalze 41' unterhalb des Transportpfades der blattförmigen Bedruckstoffe 1 befindet. Die Werkzeugwalze 41 trägt ein Schneidelement 42 auf ihrem Umfang, derart, dass das Schneidelement 42 in den Transportpfad einragt und in Zusammenwirkung mit der Gegenwalze 41' einen durchlaufenden blattförmigen Bedruckstoff 1 in ein erstes Teil 1' und ein zweites Teil 1" zerschneidet.

Die Werkzeugwalze 41 und die Gegenwalze 41' ruhen im Normalzustand der erfindungsgemäßen Vorrichtung 100 in einer Position, in der der Transportpfad durch das Schneidmodul 40 nicht behindert wird, z.B. mit dem Schneidelement 42 auf der dem Transportpfad der blattförmigen Bedruckstoffe 1 abgekehrten Seite. Durch ein Sensorsignal eines Kantendetektors 32, 32' wird nach der von der Elektronik bestimmten Zeitspanne die Bewegung der Werkzeugwalze 41 und der Gegenwalze 41' ausgelöst, so dass das Schneidelement 42 genau dann in Zusammenwirkung mit der Gegenwalze 41' tritt, wenn der blattförmige Bedruckstoff 1 sich genau so zwischen der Werkzeugwalze 41 und der Gegenwalze 41' befindet, dass die Zusammenwirkung von Werkzeugwalze 41 und Gegenwalze 41' das Zerschneiden des blattförmigen Bedruckstoffs 1 an der vorhergesehenen Schneidlinie durchführt. Die Zeitspanne berechnet sich aus der Distanz des Kantenensors 32, 32' zur Schnittposition und der Geschwindigkeit, mit der sich die blattförmigen Bedruckstoffe 1 auf dem Transportpfad durch die erfindungsgemäße Vorrichtung 100 bewegen.

Stromabwärts hinter der Werkzeugwalze 41 und der Gegenwalze 41' ist ein weiteres Transportrollenpaar 43' angeordnet, das die zerschnittenen Teile 1', 1" des blattförmigen Bedruckstoffs 1 weiter transportiert. Dabei wird das Transportrollenpaar 43' derart angetrieben, dass die Transportgeschwindigkeit bei Förderung des ersten Teils 1' kurzzeitig erhöht wird. Dadurch legt das erste Teil' einen etwas größeren Weg zurück, wodurch der Abstand zwischen den Teilen 1', 1" vergrößert wird und beispielsweise nachfolgende Verarbeitungsvorrichtungen die Vorder- und/oder Hinterkanten der Teile 1', 1" als Referenzen verwenden können und die Wahrscheinlichkeit eines fehlerlosen Transports der Teile 1', 1" des blattförmigen Bedruckstoffs 1 vergrößert wird.

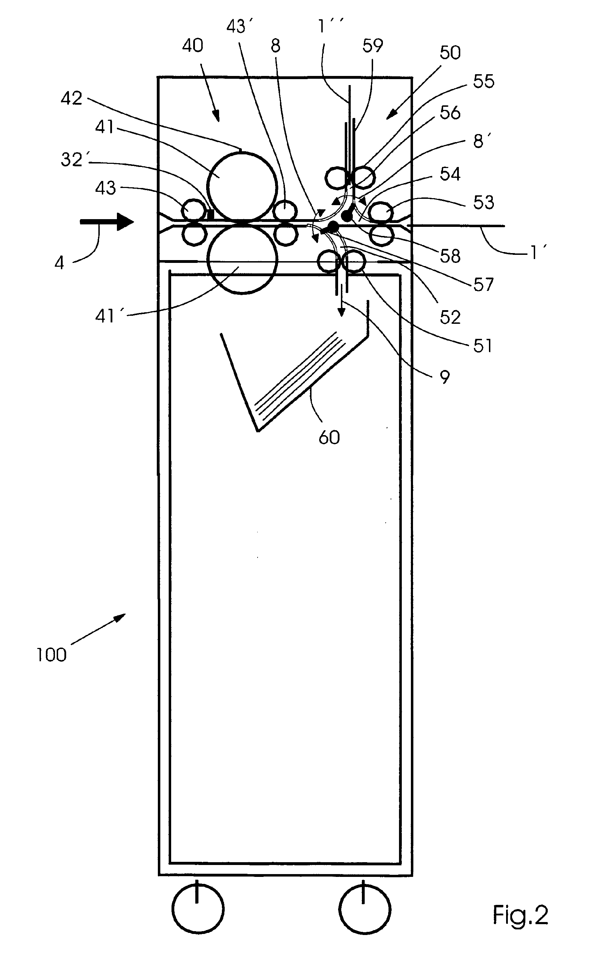

In Fig. 2 ist eine weitere Ausführungsform der erfindungsgemäßen Vorrichtung 100 gezeigt. Hierbei werden bereits zur Mittellinie des Transportpfads der blattförmigen Bedruckstoffe 1 durch die erfindungsgemäße Vorrichtung 100 ausgerichtete blattförmige Bedruckstoffe 1 angeliefert und von dem Transportrollenpaar 43 übernommen. Im Unterschied zu der oben beschriebenen Ausführungsform schließt sich hier dem Schneidmodul 40 nachgelagert eine Transportpfadsteuerungsvorrichtung 50 an.

Die Transportpfadsteuerungsvorrichtung 50 besteht aus einer Mehrzahl von Transportpfaden 52, 54, 56, in denen ein blattförmiger Bedruckstoff 1 oder dessen Teile 1', 1" mittels zugeordneter Transportrollenpaare 51, 53, 55 bewegt wird. In der dargestellten Ausführungsform ist am Eingang der Transportpfadsteuerungseinrichtung 50 ein erstes Transportpfadschaltelement 57 angebracht, das in Richtung des mit dem Bezugszeichen 8 gekennzeichneten Pfeils schwenkbar ist, und je nach Stellung einen ersten Transportpfad 52 freigibt oder aber den blattförmigen Bedruckstoff 1 oder dessen Teile 1', 1" den anderen Transportpfaden 54, 56 zuleitet. Der erste Transportpfad 52 transportiert den blattförmigen Bedruckstoff 1 oder dessen Teile 1', 1" entlang der mit dem Bezugszeichen 9 gekennzeichneten Pfeil in ein Abfallbehälter 60.

Ein zweites Transportpfadschaltelement 58 leitet den blattförmigen Bedruckstoff 1 oder dessen Teile 1', 1" entlang eines dritten Transportpfades 56 in eine Parkposition 59 oder leitet den blattförmigen Bedruckstoff 1 oder dessen Teile 1', 1" entlang eines zweiten Transportpfads 54 aus der erfindungsgemäßen Vorrichtung 100 z.B. einer nicht dargestellten, nachgelagerten Weiterverarbeitungsvorrichtung oder einer nicht dargestellten, dem Fachmann bekannten Ablage für blattförmige Bedruckstoffe 1 zu.

Ein in die Parkposition 59 eingeleiteter blattförmiger Bedruckstoff 1 oder dessen Teile 1', 1" bleibt in der Parkposition 59, bis eine gewünschte Anzahl von weiteren nachfolgenden Bedruckstoffen 1 die erfindungsgemäße Vorrichtung 100 entlang des ersten Transportpfades 52 oder des zweiten Transportpfades 54 verlassen haben und wird dann durch Einstellung des zweiten Transportpfadschaltelement 58 mittels des dem dritten Transportpfad 56 zugeordneten Transportrollenpaars 55 in den zweiten Transportpfad 54 eingespeist. Durch die Beschaffenheit des zweiten Transportpfadschaltelements 58 wird der sich in der Parkposition 56 befindliche blattförmige Bedruckstoff 1 oder dessen Teile 1', 1" wie bei einer aus dem Stand der Technik bekannten Y-Wendung gewendet.

Anhand eines Beispiels wird im Folgenden die Bearbeitung einer 16 DIN A5 Seiten Broschüre mit Deck- und Rückenblatt beschrieben. Die Seiten der Broschüre werden mittels eines vorgelagerten Druckers/Kopierers im DIN A4 Format bedruckt und der erfindungsgemäßen Vorrichtung 100 zugeleitet und ausgerichtet oder bereits ausgerichtet zugeleitet, wobei der erste DIN A4 Bedruckstoff das Deck- und Rückenblatt darstellt. Der erste Bedruckstoff 1 wird von dem Längensensor 31 vermessen und von einer Elektronik wird die Lage der Schnittlinie ermittelt und die Zeitspanne berechnet, die zwischen der Detektion der Hinter- oder Vorderkante des blattförmigen Bedruckstoffs 1 durch den Kantensensor 32, 32' erfasst wird und bis zu dem Auslösen des Schneidvorgangs vergeht. Nach Detektion der Hinter- oder Vorderkante des blattförmigen Bedruckstoffs 1 durch den Kantensensor 32, 32' und dem Verstreichen der ermittelten Zeitspanne wird das Schneidmodul 40 in Bewegung gesetzt und das Schneidmodul 40 zerteilt den blattförmigen Bedruckstoff 1 der Größe DIN A4 in zwei gleich große Teile 1', 1" der Größe DIN A5. Das der Werkzeugwalze 41 und der Gegenwalze 41' nachgelagerte Transportrollenpaar 43 beschleunigt kurz den ersten Teil 1', um eine Lücke zwischen dem ersten Teil 1' und dem zweiten Teil 1" entstehen zu lassen und übergibt den ersten Teil 1' an die Transportpfadsteuerungseinrichtung 50. Das erste Transportpfadsteuerungselement 57 und das zweite Transportpfadsteuerungselement 58 befinden sich in einer Stellung, in der der erste Teil 1' in den zweiten Transportpfad 54 geleitet wird und danach mittels des dem zweiten Transportpfad 54 zugeordneten Transportwalzenpaares 53 aus der erfindungsgemäßen Vorrichtung geleitet wird. Nach dem Passieren der Hinterkante des ersten Teils 1' schwenkt das zweite Transportpfadsteuerungselement 58 in den Transportpfad ein und leitet den zweiten Teil 1", nämlich das Rückenblatt, in die Parkposition 59 ein. Im Anschluss schwenkt das zweite Transportpfadsteuerungselement 58 zurück und gibt den zweiten Transportpfad 54 wieder frei, entlang dem die 4 folgenden DIN A4 Blätter, die auf gleiche beschriebene Weise von dem Schneidmodul in DIN A5 Blätter zerteilt wurden, transportiert werden. Nachdem das letzte der DIN A5 Blätter die erfindungsgemäße Vorrichtung durch den zweiten Transportpfad 54 passiert hat, gibt das zweite Transportpfadsteuerungselement 58 den zweiten Transportpfad 54 für das Rückenblatt 1" aus der Parkposition 59 frei. Das Rückenblatt 1" wird mittels dem dritten Transportpfad 56 zugeordneten Transportwalzenpaares 55 bereits gewendet ebenfalls in den zweiten Transportpfad 54 transportiert und im Anschluss aus der erfindungsgemäßen Vorrichtung 100 transportiert. Auf diese Weise können die Seiten der Broschüre in der erforderlichen Reihenfolge einer Bindeeinrichtung zugeführt werden.

Die hier beschriebene Vorrichtung eines diskontinuierlich arbeitenden, rotativen Querschneiders für blattförmige Bedruckstoffe findet besonderen Einsatz bei der Inline-Weiterverarbeitung von Druckprodukten, insbesondere bei der Formatverkleinerung von Bedruckstoffen von Digitaldruckmaschinen. Ein Einsatz zum Beschnitt von Bedruckstoffen aus Bogenoffsetdruckmaschinen ist ebenfalls ohne weiteres denkbar und liegt im Rahmen der hier dargestellten Erfindung.

### Liste der Bezugszeichen

- 1: blattförmiger Bedruckstoff
- 1', 1": zerschnittene Teile des blattförmigen Bedruckstoffs
- 2: Transportrollen
- 4: Bewegungsrichtung eines blattförmigen Bedruckstoffs durch die Vorrichtung
- 5: Bewegungsrichtung des Schräglaufs
- 7: Bewegungsrichtung des Anschlags
- 8, 8': Bewegungsrichtung der Transportpfadschaltelemente
- 9: Bewegungsrichtung in den Abfallbehälter
- 10: Preregistratur
- 12: Motor
- 14: Transportrolle
- 20: Registratur
- 21: Kugelleiste
- 22: Kugel
- 23: Anschlag
- 25: Kurvenscheibe
- 31: Längensensor
- 32: Hinterkantensensor
- 32': Vorderkantensensor
- 40: Schneidmodul
- 41: Werkzeugwalze
- 41': Gegenwalze
- 42: Schneidelement
- 43, 43': Transportrollen
- 50: Transportpfadsteuerungseinrichtung
- 51: Transportrollenpaar im ersten Transportpfad
- 52: erster Transportpfad
- 53: Transportrollenpaar im zweiten Transportpfad
- 54: zweiter Transportpfad
- 55: Transportrollenpaar im dritten Transportpfad
- 56: dritter Transportpfad
- 57: erstes Transportpfadschaltelement
- 58: zweites Transportpfadschaltelement
- 59: Parkposition
- 60: Auffangbehälter für Abfall
- 100: erfindungsgemäße Vorrichtung

## Patentansprüche

1. Vorrichtung zum fliegenden Zerschneiden von blattförmigen Bedruckstoffen (1), mit einem rotativen Schneidmodul (40) und mindestens einem dem Schneidmodul (40) vorgelagerten Kantensensor (32, 32') zur Detektion der Vorderkante oder Hinterkante des blattförmigen Materials (1),
**dadurch gekennzeichnet,**
**dass** der Beginn des Schneidvorgangs durch eine Elektronik in Abhängigkeit von dem Detektionssignal des Kantensensors (32, 32') und der Länge des blattförmigen Bedruckstoffs (1) bestimmt wird.

2. Vorrichtung nach dem Anspruch 1,
**dadurch gekennzeichnet,**
**dass** durch den Zerschneidvorgang der blattförmige Bedruckstoff (1) mittig zerteilt wird, wobei ein gleich großes erstes Teil (1') und ein zweites Teil (1") entstehen.

3. Vorrichtung nach einem der Ansprüche 1 bis 2,
**dadurch gekennzeichnet,**
**dass** die Länge des blattförmigen Bedruckstoffs (1) durch einen dem Schneidmodul (40) vorgelagerten Längensensor (31) bestimmt wird.

4. Vorrichtung nach Anspruch 3,
**dadurch gekennzeichnet,**
**dass** eine Elektronik aus der mittels des dem Schneidwerkzeug vorgelagerten Längensensor (31) bestimmten Länge des blattförmigen Bedruckstoffs (1) die Position des Schnitts und die Zeitspanne berechnet, nach der der Schneidvorgang ausgelöst wird, sobald der Kantensensor (32, 32') die Vorder- oder Hinterkante des blattförmigen Bedruckstoffs (1) detektiert hat.

5. Vorrichtung nach Anspruch 4,
**dadurch gekennzeichnet,**
**dass** die Elektronik die Zeitspanne, nach der der Schneidvorgang ausgelöst wird, in Abhängigkeit der Distanz zwischen dem Kantensensor (32, 32') und der Schnittposition im Schneidmodul (40) und der Geschwindigkeit der blattförmigen Bedruckstoffe (1) durch die erfindungsgemäße Vorrichtung (100) berechnet.

6. Vorrichtung nach einem der Ansprüche 1 bis 5,
**dadurch gekennzeichnet,**
**dass** unabhängig von der Größe des blattförmigen Bedruckstoffs (1) sich der blattförmige Bedruckstoff (1) mittig auf dem Transportpfad der blattförmigen Bedruckstoffe (1) durch das Schneidmodul (40) bewegt.

7. Vorrichtung nach einem der Ansprüche 1 bis 6,
**dadurch gekennzeichnet,**
**dass** hinter dem Schneidmodul (40) das erste Teil (1') des zerschnittenen blattförmigen Bedruckstoffs (1) mittels Transportrollen (43') vorwärts beschleunigt wird, so dass zwischen dem ersten Teil (1') des blattförmigen Bedruckstoffs (1) und dem zweiten Teil (1") des blattförmigen Bedruckstoffs (1) eine Lücke entsteht.

8. Vorrichtung nach einem der Ansprüche 1 bis 7,
**dadurch gekennzeichnet,**
**dass** hinter dem Schneidmodul (40) eine Transportpfadsteuerungsvorrichtung (50) angebracht ist, so dass für jede der beiden Teile (1', 1") des zerschnittenen blattförmigen Bedruckstoffs (1) unterschiedliche Transportpfade (52, 54, 56) eingestellt werden können.

9. Vorrichtung nach Anspruch 8,
**dadurch gekennzeichnet,**
**dass** mittels der Transportpfadsteuerungsvorrichtung (50) eines der Teile (1', 1") des zerschnittenen blattförmigen Bedruckstoffs (1) in eine Parkposition (59) gebracht wird und zu einem späteren Zeitpunkt wiedereingespeist wird.

10. Vorrichtung nach Anspruch 9,
**dadurch gekennzeichnet,**
**dass** bei der Wiedereinspeisung des einen Teils (1', 1") des zerschnittenen blattförmigen Bedruckstoffs (1) das Teil (1', 1") mittels einer Y-Wendung gewendet wird.

11. Vorrichtung nach einem der Ansprüche 8 bis 10,
**dadurch gekennzeichnet,**
**dass** mittels der Transportpfadsteuerungsvorrichtung (50) eines der Teile (1', 1") des zerschnittenen blattförmigen Bedruckstoffs (1) in einen Abfallbehälter (60) geleitet wird.

12. Vorrichtung nach einem der Ansprüche 1 bis 11,
**dadurch gekennzeichnet,**
**dass** die Vorrichtung (100) vor dem Schneidmodul (40) eine Registratur (20) aufweist, mittels der die Mittellinie der blattförmigen Bedruckstoffe (1) bezüglich der Mittellinie des Schneidmodul (40) ausgerichtet werden.

13. Vorrichtung nach einem der Ansprüche 1 bis 12,
**dadurch gekennzeichnet,**
**dass** die Vorrichtung (100) wahlweise in einem Bypass Betrieb arbeitet, bei dem die blattförmigen Bedruckstoffe (1) nicht zerschnitten werden.
